# EUROPÄISCHE PATENTSCHRIFT

(11) **EP 0 992 320 B1**
(45) Veröffentlichungstag und Bekanntmachung des Hinweises auf die Patenterteilung: **16.11.2005**
(21) Anmeldenummer: 99810872.4
(22) Anmeldetag: 28.09.1999
(51) Int. Cl.: B23Q 11/10, B23Q 11/12, H02K 5/20, H02K 9/19, H02K 11/04, B28D 7/02

(54) **Gerät zur Bearbeitung eines harten Untergrundes**
Tool for machining a hard material
Outil pour travailler des matériaux durs

(30) Priorität: 09.10.1998 DE 19846712
(43) Veröffentlichungstag der Anmeldung: 12.04.2000
(73) Patentinhaber: HILTI Aktiengesellschaft, 9494 Schaan (LI)
(72) Erfinder: Kristen, Ferdinand, 86916 Kaufering (DE); Bongers-Ambrosius, Hans-Werner, 81477 München (DE); Schittl, Josef, 6712 Thüringen (AT); Reisinger, Erwin, 8055 Seiersberg (AT)
(74) Vertreter: Wildi, Roland

(56) Entgegenhaltungen:
- EP-A- 0 480 484
- WO-A-98/28833
- DE-A- 3 136 880
- DE-A- 3 545 328
- DE-A- 4 123 618
- DE-A- 4 330 520
- DE-A- 4 411 517
- DE-A- 19 532 976
- DE-A- 19 626 213
- GB-A- 883 684
- US-A- 2 946 244
- PATENT ABSTRACTS OF JAPAN vol. 010, no. 050 (E-384), 27. Februar 1986 (1986-02-27) -& JP 60 204241 A (TOSHIBA KK), 15. Oktober 1985 (1985-10-15)
- PATENT ABSTRACTS OF JAPAN vol. 010, no. 066 (M-461), 15. März 1986 (1986-03-15) -& JP 60 211198 A (YASUKAWA DENKI SEISAKUSHO KK), 23. Oktober 1985 (1985-10-23)
- PATENT ABSTRACTS OF JAPAN vol. 1996, no. 09, 30. September 1996 (1996-09-30) -& JP 08 118198 A (MAKINO MILLING MACH CO LTD), 14. Mai 1996 (1996-05-14)
- PATENT ABSTRACTS OF JAPAN vol. 018, no. 502 (M-1676), 20. September 1994 (1994-09-20) -& JP 06 170835 A (SHIBUYA SEISAKUSHO:KK), 21. Juni 1994 (1994-06-21)

## Beschreibung

Die Erfindung betrifft ein Gerät zur Bearbeitung eines harten Untergrundes gemäss dem Oberbegriff des Patentanspruchs 1.

Zur Herstellung von Bohrungen oder Durchbrüchen in harten Untergründen werden Bohrgeräte oder Schneidgeräte verwendet, deren Werkzeuge mit Diamantpartikel aufweisenden Schneidsegmenten besetzt sind. Je nach Härte des Untergrundes bzw. Tiefe der herzustellenden Bohrung bzw. Schnittes müssen die Geräte unterschiedliche Leistungen erbringen. Insbesondere bei Geräten mit einer sehr hohen Leistung entsteht beim Bohrvorgang bzw. Schneidvorgang im Bereich des Antriebsmotors aber auch im Bereich elektronischer Bauteile, die der Steuerung des Antriebsmotors bzw. des gesamten Gerätes dienen, eine sehr hohe Wärme, die zu Störungen in der Steuerung des Gerätes führen können. Hohe Temperaturen können im Bereich einer, beispielsweise aus wenigstens einem elektronischen Bauteil bestehenden, Elektronik, für die Steuerung des Gerätes, hervorgerufen werden, durch Hitzestaus, durch hohe Umgebungstemperaturen oder durch eine unzureichende Belüftung des elektronischen Bauteiles, wenn dieses beispielsweise mit Staub belegt ist, oder die Belüftungsschlitze durch Staubansammlungen fast vollständig verschlossen sind, so dass kühle Umgebungsluft nicht mehr zu dem elektronischen Bauteil gelangen kann.

Um die bei der Bearbeitung eines harten Untergrundes im Bereich eines Antriebsmotors entstehende Wärme abführen zu können, ist aus der DE-43 30 520 ein Bohrgerät mit einem Antriebsmotor in Verbindung mit einem Bohrwerkzeug bekannt, wobei ein den Antriebsmotor umgebender Teil des Gehäuses von einem Kühlkanal durchsetzt wird, der sich spiralförmig von einem entgegen der Bohrrichtung liegenden Einlass über den gesamten Antriebsmotor bis zu einem bohrrichtungsseitigen Auslass erstreckt. Durch den Kühlkanal fliesst Kühlmittel, das von einer externen Kühlmittel-Versorgungsquelle druckbeaufschlagt zur Verfügung gestellt und mittels einer Kühlmittel-Zuflussleitung dem Einlass zugeführt wird. Eine vom Auslass des Kühlkanals ausgehende Kühlmittel-Abflussleitung erstreckt sich bis zum Bohrwerkzeug. Das über die Kühlmittel-Abflussleitung dem Bohrwerkzeug zugeführte Kühlmittel dient neben der Kühlung des Bohrwerkzeuges auch dem Ausspülen von Bohrklein aus einem Bohrloch. Bei bestimmten Anwendungen muss beispielsweise vermieden werden, dass Kühlmittel zum Werkzeug gelangt. In so einem Fall, verbindet die Kühlmittel-Abflussleitung den Auslass des Kühlkanals beispielsweise mit der Kühlmittel-Versorgungsquelle.

Bei dem aus der DE-43 30 520 bekannten Bohrgerät wird nur der Antriebsmotor mit Kühlmittel gekühlt. Insbesondere im Bereich elektronischer Bauteile, die der Steuerung des Antriebsmotors dienen, kann aber die Wärme sehr stark ansteigen und zu Störungen in der Steuerung des Bohrgerätes führen.

Der Erfindung liegt die Aufgabe zugrunde, ein Gerät zur Bearbeitung von harten Untergründen zu schaffen, bei dem die elektronischen Bauteile auch bei einer hohen Belastung des Gerätes, bei hohen Umgebungstemperaturen und unter extrem staubiger Umgebung eine optimale Kühlung erfahren.

Die Lösung dieser Aufgabe erfolgt durch ein Gerät zur Bearbeitung von harten Untergründen, welches die im kennzeichnenden Abschnitt des Patentanspruchs 1 angeführten Merkmale aufweist.

Aufgrund der erfindungsgemässen Anordnung der mit dem elektronischen Bauteil zusammenwirkenden Kühleinrichtung in der Kühlmittel-Zuflussleitung fliesst das von der Kühlmittel-Versorgungsquelle zur Verfügung gestellte, druckbeaufschlagte Kühlmittel zuerst durch die Kühleinrichtung und anschliessend durch den Kühlkanal des Antriebsmotors.

Zweckmässigerweise wird die Kühleinrichtung von wenigstens einem Grundkörper mit guten Wärmeleitungseigenschaften gebildet, an dem das elektronische Bauteil angeordnet ist. Der Grundkörper ist beispielsweise aus Aluminium gebildet und weist einen druchgehenden Kanal auf, durch den Kühlmittel strömen kann und dabei Wärme, die von dem elektronischen Bauteil erzeugt wird oder aus der Umgebung auf den Grundkörper einwirkt, abführt.

Um ein kompaktes, gut handhabbares Gerät schaffen zu können, ist vorzugsweise die Kühleinrichtung in dem Gehäuse des Gerätes angeordnet. Über einen Teil der Kühlmittel-Zuflussleitung ist die Kühleinrichtung mit dem Kühlkanal des Antriebsmotors verbunden.

Um feststellen zu können, ob das Kühlmittel in dem gesamten Kühlsystem, das sich im wesentlichen aus der Kühlmittel-Versorgungsquelle, der Kühlmittel-Zuflussleitung, der Kühleinrichtung, dem Kühlkanal und dem Kühlmittel-Abflusskanal zusammensetzt, zirkuliert bzw. fliesst, wirkt zweckmässigerweise die Kühleinrichtung mit einem Durchflusswächter zusammen.

Da das elektronische Bauteil empfindlich gegen hohe Temperaturen ist, muss dafür gesorgt werden, dass das Kühlmittel durch den mit dem elektronischen Bauteil verbundenen Grundkörper fliesst, bevor der beispielsweise über das elektronische Bauteil gesteuerte Antriebsmotor in Betrieb genommen wird und sich dadurch das elektronische Bauteil sehr stark erwärmt. Aus diesem Grund wirkt vorzugsweise der Durchflusswächter mit dem elektronischen Bauteil zusammen. Bei dem Durchflusswächter handelt es sich beispielsweise um einen Magnetschalter, der vom zirkulierenden, druckbeauschlagten Kühlmittel gegen die Kraft einer Feder in eine Endstellung versetzbar ist, in der der Magnetschalter die Zirkulation des Kühlmittels in dem Kühlsystem mittels eines Signales dem elektronischen Bauteil mitteilt. Wenn dieses Signal an dem elektronischen Bauteil anliegt, dann kann eine Inbetriebnahme des Antriebsmotors erfolgen. Fehlt das Signal des Magnetschalters, so bedeutet dies, dass das Kühlmittel in dem Kühlsystem nicht zirkuliert und daher die Kühleinrichtung nicht gekühlt wird.

Um ein Auslaufen von Kühlmittel aus dem Kühlkanal des Antriebsmotors zu verhindern, wenn sich das Gerät nicht mehr in Betrieb befindet, wirkt vorteilhafterweise die Kühleinrichtung mit einem Absperrventil zusammen, mit dem die Zufuhr von Kühlmittel zum Antriebsmotor steuerbar ist.

Damit das die Kühlmittel-Abflussleitung passierende Kühlmittel entweder dem Werkzeug oder der Kühlmittel-Versorgungsquelle zugeführt werden kann, mündet vorteilhafterweise das Kühlmittel nach der Kühlmittel-Abflussleitung in einen umschaltbaren Verteiler und von dort in zwei weitere, getrennte Kühlmittel-Abflussleitungen, wobei eine erste, weitere Kühlmittel-Abflussleitung mit dem Werkzeug in Verbindung steht und die zweite, weitere Kühlmittel-Abflussleitung mit der Kühlmittel-Versorungsquelle verbunden ist.

Damit ein Teil des Kühlmittels dem Werkzeug und ein Teil der Kühlmittel-Versorgungsquelle - vorzugsweise jeweils im wesentlichen 50% - zugeführt werden kann, weist vorteilhafterweise der umschaltbare Verteiler drei Schaltstellungen auf, wobei in einer ersten Schaltstellung über die erste, weitere Kühlmittel-Abflussleitung das gesamte Kühlmittel dem Werkzeug, in einer zweiten Schaltstellung über die zweite, weitere Kühlmittel-Abflussleitung das gesamte Kühlmittel der Kühlmittel-Versorgungsquelle und in einer dritten Schaltstellung das Kühlmittel sowohl dem Werkzeug als auch der Kühlmittel-Versorgungsquelle zugeführt wird.

Damit das Gerät auch auf Baustellen verwendet werden kann, auf denen kein als Kühlmittel dienendes Frischwasser aus einem Orts-Wasserleitungsnetz zur Verfügung steht, ist vorteilhafterweise die Kühlmittel-Versorgungsquelle von einer Kühlmittel-Aufbereitungsvorrichtung gebildet, die beispielsweise einen Kühlmittel-Tank, eine Einrichtung zum Kühlen, Reinigen, bzw. zum Filtern des Kühlmittels und eine Pumpe aufweist, mit der Kühlmittel druckbeaufschlagt dem Kühlkanal zugeführt werden kann.

Damit das Gerät von der Bedienungsperson gut handhabbar ist, ist vorzugweise die Kühlmittel-Aufbereitungsvorrichtung vom Gehäuse getrennt angeordnet.

Die Erfindung wird anhand einer Zeichnung, die ein Ausführungsbeispiel wiedergibt, näher erläutert.

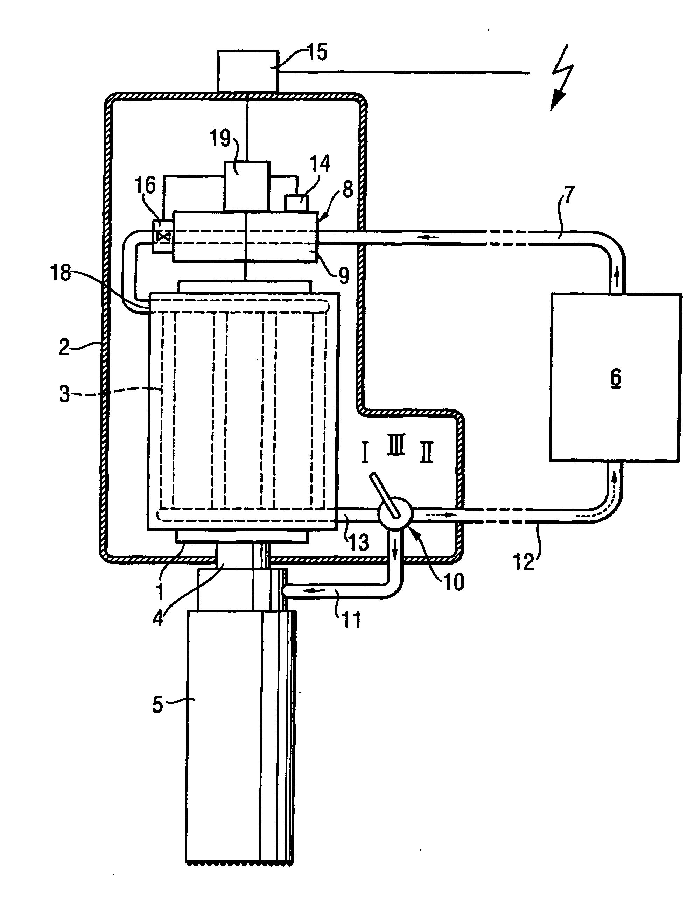

Bei dem erfindungsgemässen Gerät zur Bearbeitung eines Untergrundes handelt es sich um ein Bohrgerät mit einem Gehäuse 2, einem Antriebsmotor 1, einem an einer Werkzeugspindel 4 des Bohrgerätes angeordneten Werkzeug 5, einer gegenüber dem Gehäuse 2 entfernt angeordneten Kühlmittel-Versorungsquelle 6 in Form einer Kühlmittel-Aufbereitungsvorrichtung, mit der druckbeaufschlagtes Kühlmittel einem Kühlkanal 3 zugeführt werden kann, der einen den Antriebsmotor 1 umgebenden Teil des Gehäuses 2 durchsetzt. Die Kühlmittel-Versorungsquelle 6 kann beispielsweise auch ein örtliches Wasserleitungsnetz sein, aus dem druckbeaufschlagtes Frischwasser als Kühlmittel entnommen werden kann. Der strichliert dargestellte Kühlkanal 3 ist beispielsweise im Bereich des Einlasses 18 und eines Auslasses ringförmig ausgebildet und weist mehrere im wesentlichen parallel zueinander verlaufende, voneinander beabstandete Kammern auf, die sich durch die Wandung des Gehäuses 2 von einer Ringkammer zur anderen Ringkammer erstrecken. Der Rotor und andere wichtige Teile des Antriebsmotors 1 sind in dieser vereinfachten Zeichnung nicht dargestellt.
Die Werkzeugspindel 4 wird von einem Teil der Motorwelle des Antriebsmotors 1 gebildet. Sie kann aber auch Teil eines Getriebes sein, das beispielsweise zwischen dem Antriebsmotor 1 und dem Werkzeug 5 angeordnet ist. Das Werkzeug 5 setzt sich zusammen aus einem mit der Werkzeugspindel 4 koppelbaren, nicht dargestellten Einsteckende, an das sich in Bohrrichtung ein rohrförmiger Trägerkörper anschliesst, der an seinem bohrrichtungsseitigen, freien Ende mehrere Schneidsegmente aufweist, die mit Diamantpartikeln bestückt sind. Die Kühlmittel-Versorgungsquelle 6 weist beispielsweise einen Kühlmittel-Tank, eine Einrichtung zum Kühlen, Reinigen, bzw. zum Filtern des Kühlmittels und eine Pumpe auf, mit der das Kühlmittel druckbeaufschlagt dem Kühlkanal 3 zugeführt werden kann. Sowohl der Kühlmittel-Tank, die Einrichtung zum Kühlen, Reinigen bzw. Filtern und die Pumpe sind in der Zeichnung nicht dargestellt.

In einer von der Kühlmittel-Versorgungsquelle 6 ausgehenden und in den Einlass 18 des Kühlkanals 3 mündenden Kühlmittel-Zuflussleitung 7 ist eine in das Gehäuse 2 des Gerätes integrierte Kühleinrichtung 8 angeordnet, die mit einem elektronischen Bauteil 19 verbunden ist. Diese Kühleinrichtung 8 wird von einem Grundkörper 9 gebildet, dessen Material gute Wärmeleitungseigenschaften besitzt. Der Grundkörper 9 wird von einem Kanal durchsetzt, durch den Kühlmittel strömt, wenn dieses von der Kühlmittel-Versorgungsquelle 6 zum Kühlkanal 3 fliesst. Aufgrund der guten Wärmeleitungseigenschaften, wird die im Bereich des elektronischen Bauteiles 19 auftretende Wärme von dem Grundkörper 9 aufgenommen und mit dem kalten Kühlmittel aus dem Grundkörper 9 abgeführt.

In der Kühlmittel-Zuflussleitung 7, insbesondere im Bereich der Kühleinrichtung 8 ist ein Durchflusswächter 14 angeordnet, mit dem überprüft werden kann, ob das in der Kühlmittel-Zuflussleitung 7 befindliche Kühlmittel fliesst oder ob es ruht.

Der Durchflusswächter 14, der Antriebsmotor 1 und ein Betätigungsschalter 15 stehen mit dem der Steuerung des Gerätes dienenden elektronischen Bauteil 19 in Verbindung. Über einen an einer externen Stromquelle angeschlossenen Betätigungsschalter 15 ist dem elektronischen Bauteil 19 Strom zuführbar. Bei dem elektronischen Bauteil 19 handelt es sich beispielsweise um eine elektronische Steuerung mit der neben dem Antriebsmotor 1auch die Kühlmittel-Versorgungsquelle 6 steuerbar ist.

Das elektronische Bauteil 19 ist empfindlich gegen hohe Temperaturen und gegen hohe Temperaturschwankungen. Aus diesem Grund ist eine Kühlung desselben notwendig, und zwar bereits zu einem Zeitpunkt, bevor der Antriebsmotor 1 zu laufen beginnt. Um diese entsprechende Kühlung erreichen zu können, wird beispielsweise bei einer Betätigung des Betätigungsschalters 15 zuerst von dem Durchflusswächter 14 überprüft, ob das Kühlmittel in der Kühlmittel-Zuflussleitung 7 fliesst. Fliesst das Kühlmittel, so gelangt in einem weiteren Schritt der Strom der externen Stromquelle über den Betätigungsschalter 15 zum elektronischen Bauteil 19 und von dort an den Antriebsmotor 1, so dass der Antriebsmotor 1 zu laufen beginnt. Wenn das Kühlmittel in der Kühlmittel-Zuflussleitung 7 nicht fliesst, dann darf das elektronische Bauteil 19 den Strom der externen Stromquelle nicht an den Antriebsmotor 1 weiterleiten.

Zwischen einem Auslass des Kühlkanals 3 und dem Werkzeug 5 bzw. der Kühlvorrichtung 6 ist eine Kühlmittel-Abflussleitung 13 angeordnet, die in einen umschaltbaren Verteiler 10 mündet. Ausgehend von diesem umschaltbaren Verteiler 10 erstrecken sich eine erste, weitere Kühlmittel-Abflussleitung 11 zum Werkzeug 5 und eine zweite, weitere Kühlmittel-Abflussleitung 12 zur Kühlmittel-Versorgungsquelle 6. Die Verteilung des Kühlmittels kann innerhalb des umschaltbaren Verteilers 10 in drei Schaltstellungen I, II, III erfolgen. In einer ersten Schaltstellung I wird das gesamte Kühlmittel über die erste, weitere Kühlmittel-Abflussleitung dem Werkzeug 5 zugeführt. In einer zweiten Schaltstellung II wird das gesamte Kühlmittel über die zweite, weitere Kühlmittel-Abflussleitung der Kühlmittel-Versorgungsquelle 6 zugeführt. In einer dritten Schaltstellung III wird ein Teil über die erste, weitere Kühlmittel-Abflussleitung 11 dem Werkzeug 5 und der restliche Teil des Kühlmittels über die zweite, weitere Kühlmittel-Abflussleitung 12 der Kühlmittel-Versorgungsquelle 6 zugeführt.

Um zu verhindern, dass Kühlmittel in der Schaltstellung I des umschaltbaren Verteilers 10 aus dem Werkzeug 5 herausrinnt, wenn sich der Antriebsmotor 1 auf einem tieferen Niveau befindet als die Kühlmittel-Versorgungsquelle 6 und die Pumpe der Kühlmittel-Versorgungsquelle 6 nicht läuft, befindet sich in der Kühlmittel-Zuflussleitung 7 ein in das Gehäuse 2 des Gerätes integriertes Absperrventil 16, das elektrisch mit Hilfe des elektronischen Bauteiles 19 betätigbar ist. Es ist beispielsweise auch möglich, das Absperrventil 16 mechanisch oder elektrisch mit Hilfe des Betätigungsschalters 15 zu betätigen.

Das erfindungsgemässe Gerät zur Bearbeitung eines harten Untergrundes kann beispielsweise auch eine Wandsäge mit einem flüssigkeitsgekühlten Antriebsmotor und zwei Vorschubmotoren sein, wobei ein erster Vorschubmotor dem Längsvorschub der Wandsäge und ein zweiter Vorschubmotor mit einem Schwenkarm zusammenwirkt, an dem sich ein Werkzeug in Form eines grossflächigen Schneidblattes befindet, das an seinem Umfang mehrere Schneidsegmente mit Diamantpartikeln aufweist. Das von der Kühlmittel-Versorgungsquelle bereitgestellte Kühlmittel kann beispielsweise zur Kühlung der beiden Vorschubmotoren verwendet werden, bevor dieses in den Kühlkanal des Antriebsmotors fliesst und diesen kühlt.

Im Bereich der Kühleinrichtung 8, innerhalb des Gehäuses 2 des Gerätes ist beispielsweise ein nicht dargestellter Temperatursensor angeordnet, der den Stromfluss von der externen Stromquelle zum Antriebsmotor 1 unterbricht, oder die Vorschubgeschwindigkeit, insbesondere des Vorschubmotors, für den Längsvorschub reduziert wenn es sich bei dem Gerät um eine Wandsäge handelt.

## Patentansprüche

1. Gerät zur Bearbeitung eines harten Untergrundes mit einem Gehäuse (2), einem auf ein Werkzeug (5) einwirkenden Antriebsmotor (1), einem Kühlkanal (3) der sich durch einen, den Antriebsmotor (1) umgebenden Teil des Gehäues (2) erstreckt und einer, druckbeaufschlagtes Kühlmittel zur Verfügung stellenden Kühlmittel-Versorgungsquelle, (6) die über eine Kühlmittel-Zuflussleitung (7) mit dem Kühlkanal (3) verbunden ist und einer Kühlmittel-Abflussleitung (13) wenigstens zwischen dem Kühlkanal (3) und dem Werkzeug (5), **dadurch gekennzeichnet, dass** die Kühlmittel-Zuflussleitung (7) mit einer Kühleinrichtung (8) verbunden ist, die mit wenigstens einem elektronischen Bauteil (19) zusammenwirkt, wobei
die Kühleinrichtung (8) von wenigstens einem Grundkörper (9) mit guten Wärmeleitungseigenschaften gebildet ist, an dem das elektronische Bauteil (19) angeordnet ist
sowie der Grundkörper (9) von einem Kanal durchsetzt ist, durch den Kühlmittel strömt.

2. Gerät nach Anspruch 1, **dadurch gekennzeichnet, dass** die Kühleinrichtung (8) in dem Gehäuse (2) angeordnet ist.

3. Gerät nach Anspruch 2, **dadurch gekennzeichnet, dass** die Kühleinrichtung (8) mit einem Durchflusswächter (14) zusammenwirkt.

4. Gerät nach Anspruch 3, **dadurch gekennzeichnet, dass** der Durchflusswächter (14) mit dem elektronischen Bauteil (19) zusammenwirkt.

5. Gerät nach einem der Ansprüche 1 bis 4, **dadurch gekennzeichnet, dass** die Kühleinrichtung (8) mit einem Absperrventil (16) zusammenwirkt, mit dem die Zufuhr von Kühlmittel zum Antriebsmotor (1) steuerbar ist.

6. Gerät nach einem der Ansprüche 1 bis 5, **dadurch gekennzeichnet, dass** die von dem Antriebsmotor (1) ausgehende Kühlmittel-Abflussleitung (13) in einen umschaltbaren Verteiler (10) und von dort in zwei weitere, getrennte Kühlmittel-Abflussleitungen (11, 12) mündet, wobei eine erste, weitere Kühlmittel-Abflussleitung (11) mit dem Werkzeug (5) in Verbindung steht und die zweite, weitere Kühlmittel-Abflussleitung (12) mit der Kühlmittel-Versorgungsquelle (6) verbunden ist.

7. Gerät nach Anspruch 6, **dadurch gekennzeichnet, dass** der umschaltbare Verteiler (10) drei Schaltstellungen (I,II,III) aufweist, wobei in einer ersten Schaltstellung (I) über die erste, weitere Kühlmittel-Abflussleitung (11) das gesamte Kühlmittel dem Werkzeug (5), in einer zweiten Schaltstellung (II) über die zweite, weitere Kühlmittel-Abflussleitung (12) das gesamte Kühlmittel der Kühlmittel-Versorgungsquelle (6) und in einer dritten Schaltstellung (III) das Kühlmittel sowohl dem Werkzeug (5) als auch der Kühlmittel-Versorgungsquelle (6) zugeführt wird.

8. Gerät nach einem der Ansprüche 1 bis 7, **dadurch gekennzeichnet, dass** die Kühlmittel-Versorgungsquelle (6) von einer Kühlmittel-Aufbereitungsvorrichtung gebildet ist.

9. Gerät nach Anspruch 8, **dadurch gekennzeichnet, dass** die Kühlmittel-Aufbereitungsvorrichtung vom Gehäuse (2) getrennt angeordnet ist.

## Claims

1. Appliance for machining a hard substrate, comprising a housing (2), a drive motor (1) acting on a tool (5), a cooling channel (3) extending through a part of the housing (2) surrounding the drive motor (1), a coolant supply source (6) making available a pressurised coolant and connected via a coolant supply line (7) to the cooling channel (3), and a coolant discharge line (13) extending at least between the cooling channel (3) and the tool (5), **characterised in that** the coolant supply line (7) is connected to a cooling device (8) which cooperates with at least one electronic component (19), the cooling device (8) being formed by at least one main body (9) having good heat conduction properties, on which the electronic component (19) is arranged.

2. Appliance according to claim 1, **characterised in that** the cooling device (8) is arranged in the housing (2).

3. Appliance according to claim 2, **characterised in that** the cooling device (8) cooperates with a flow control device (14).

4. Appliance according to claim 3, **characterised in that** the flow control device (14) cooperates with the electronic component (19).

5. Appliance according to any one of claims 1 to 4, **characterised in that** the cooling device (8) cooperates with a stop valve (16) with which the supply of coolant to the drive motor (1) is controllable.

6. Appliance according to any one of claims 1 to 5, **characterised in that** the coolant discharge line (13) emerging from the drive motor (1) opens into a switchable distributor (10) and from there into two further, separate coolant discharge lines (11, 12), a first further coolant discharge line (11) being connected to the tool (5) and the second further coolant discharge line (12) being connected to the coolant supply source (6).

7. Appliance according to claim 6, **characterised in that** the switchable distributor (10) has three switching positions (I, II, III), all the coolant being supplied to the tool (5) via the first further coolant discharge line (11) in a first switching position (I), all the coolant being supplied to the coolant supply source (6) via the second further coolant discharge line (12) in a second switching position (II) and the coolant being supplied both to the tool (5) and to the coolant supply source (6) in a third switching position (III).

8. Appliance according to any one of claims 1 to 7, **characterised in that** the coolant supply source (6) is formed by a coolant processing device.

9. Appliance according to claim 8, **characterised in that** the coolant processing device is arranged separately from the housing (2).

## Revendications

1. Appareil pour travailler un support dur, avec un carter (2), un moteur d'entraînement (1) agissant sur un outil (5), un canal de refroidissement (3) qui traverse une partie du carter (2) entourant le moteur d'entraînement (1), une source de distribution de réfrigérant (6) qui fournit un réfrigérant sous pression et est reliée au canal de refroidissement (3) par l'intermédiaire d'une conduite d'amenée de réfrigérant (7), et une conduite d'évacuation de réfrigérant (13) au moins entre le canal de refroidissement (3) et l'outil (5), **caractérisé en ce que** la conduite d'amenée de réfrigérant (7) est reliée à un dispositif de refroidissement (8) qui coopère avec au moins un composant électronique (19), le dispositif de refroidissement (8) étant formé par au moins un corps de base (9) à bonne conductibilité thermique, sur lequel est disposé le composant électronique (19), et le corps de base (9) étant traversé par un canal dans lequel circule le réfrigérant.

2. Appareil selon la revendication 1, **caractérisé en ce que** le dispositif de refroidissement (8) est disposé dans le carter (2).

3. Appareil selon la revendication 2, **caractérisé en ce que** le dispositif de refroidissement (8) coopère avec un contrôleur de débit (14).

4. Appareil selon la revendication 3, **caractérisé en ce que** le contrôleur de débit (14) coopère avec le composant électronique (19).

5. Appareil selon une des revendications 1 à 4, **caractérisé en ce que** le dispositif de refroidissement (8) coopère avec une soupape d'arrêt (16) qui permet de commander l'amenée de réfrigérant au moteur d'entraînement (1).

6. Appareil selon une des revendications 1 à 5, **caractérisé en ce que** la conduite d'évacuation de réfrigérant (13) provenant du moteur d'entraînement (1) débouche dans un répartiteur commutable (10) et, de là, dans deux conduites d'évacuation de réfrigérant supplémentaires séparées (11, 12), une première conduite d'évacuation de réfrigérant supplémentaire (11) étant reliée à l'outil (5) et la seconde conduite d'évacuation de réfrigérant supplémentaire (12) étant reliée à la source de distribution de réfrigérant (6).

7. Appareil selon la revendication 6, **caractérisé en ce que** le répartiteur commutable (10) comporte trois positions de commutation (I, II, III), dans la première position de commutation (I) la totalité du réfrigérant étant envoyée à l'outil (5) à travers la première conduite d'évacuation de réfrigérant supplémentaire (11), dans la deuxième position de commutation (II) la totalité du réfrigérant étant envoyée à la source de distribution de réfrigérant (6) à travers la deuxième conduite d'évacuation de réfrigérant supplémentaire (12), et dans la troisième position de commutation (III) le réfrigérant étant envoyé aussi bien à l'outil (5) qu'à la source de distribution de réfrigérant (6).

8. Appareil selon une des revendications 1 à 7, **caractérisé en ce que** la source de distribution de réfrigérant (6) est formée par un dispositif de préparation de réfrigérant.

9. Appareil selon la revendication 8, **caractérisé en ce que** le dispositif de préparation de réfrigérant est disposé séparément du carter (2).
